(19) Europäisches Patentamt

European Patent Office

Office européen des brevets

(11) **EP 1 564 953 A2**

(12) **EUROPEAN PATENT APPLICATION**

(43) Date of publication:
**17.08.2005 Bulletin 2005/33**

(51) Int Cl.⁷: **H04L 27/26**, H04L 1/00

(21) Application number: **05003080.8**

(22) Date of filing: **14.02.2005**

| | |
|---|---|
| (84) Designated Contracting States:<br>**AT BE BG CH CY CZ DE DK EE ES FI FR GB GR**<br>**HU IE IS IT LI LT LU MC NL PL PT RO SE SI SK TR**<br>Designated Extension States:<br>**AL BA HR LV MK YU** | (72) Inventors:<br>• **Kim, Nak-Myeong #524 Mobile Telecom Lab.**<br>  **Daehyon-dong Soedaemun-gu Seoul (KR)**<br>• **Suh, Hee-Jung #524 Mobile Telecom Library**<br>  **Daehyon-dong Seodaemun-gu Seoul (KR)** |
| (30) Priority: **14.02.2004 KR 2004009825** | (74) Representative: **Grünecker, Kinkeldey,**<br>**Stockmair & Schwanhäusser Anwaltssozietät** |
| (71) Applicant: **Samsung Electronics Co., Ltd.**<br>**Suwon-city, Gyeonggi-do (KR)** | **Maximilianstrasse 58**<br>**80538 München (DE)** |

(54) **Channel state information feedback method for multi-carrier communication system**

(57) In a multi-carrier communication system where a base station performs resource allocating power allocation and adaptive modulation processes for a mobile station by using CSI(Channel State Information) received from the mobile station, a CSI feedback method in accordance with the present invention determines a CSI transmission mode according to an amount of data traffic on a reverse link, encodes CSI for subcarriers into one CSI codeword according to the determined CSI transmission mode, and transmits the CSI codeword to the base station. Since the CSI is adaptively transmitted according to the amount of the data traffic of the reverse link, it can effectively use resources of the reverse link.

FIG.1

EP 1 564 953 A2

**Description**

## BACKGROUND OF THE INVENTION

### 1. Field of the Invention

The present invention generally relates to a mobile communication system, and more particularly, to a channel state information (CSI) feedback method for a multi-carrier communication system.

### 2. Description of the Related Art

Recently, a multi-carrier transmission technology such as, for example, an OFDM (Orthogonal Frequency Division Multiplexing Scheme) has been proposed as a basis technology for supporting a data rate which will be required in an advanced mobile communication service.

Because plural subcarriers having mutual orthogonality are used in OFDM and in other like multi-carrier transmission technologies, their frequency usage efficiency is higher than the efficiency of a single carrier transmission technology.

In these multi-carrier transmission systems, resources and power are allocated to each user performing an adaptive modulation process in the multi-carrier communication, which increases the amount of CSI (Channel State Information). In other words, the CSI in the multi-carrier communication system increases in proportion to the run of subcarriers, the amount of feedback information, and a the feedback period. Here, the term, Run (which is a known terminology in Run-length encoding) is sequences in which the same data value occurs in many consecutive data elements. Accordingly, the run is the sequences of subcarriers to which an identical modulation mode is allocated.

A base station (BS) performs adaptive modulation and resource/power allocation processes based on the CSI for each subcarrier fed back from an MS(Mobile Station), that is, a modulation and coding level. For instance, in case of 4 types of modulation levels, 2-bits of information are required in order to divide each of the modulation levels. Thus, when an OFDM method is used, the MS feeds back each modulation level for all the allocated subcarriers to the base station, resulting in an exponential increase of CSI. To reduce the amount of CSI, a method for grouping adjacent subcarriers and allocating identical modulation levels based on subcarriers whose channel states are worst in the groups has been suggested. However, in the prior art, the modulation levels are allocated to subcarriers of one group in a lump, deteriorating the accuracy of CSI and likewise reducing system performance. Particularly, in case of a fast time-varying channel, there is still a severe restriction on the amount of CSI which can be fed back to the base station from the mobile station. Accordingly, a system and method which can reduce the amount of information for the CSI is desirable.

## SUMMARY OF THE INVENTION

It is therefore an object of the present invention to provide a channel state information (CSI) feedback method for increasing efficiency by compressively transmitting CSI which is fed back from an MS to a base station, in a multi-carrier communication system.

It is another object of the present invention to provide a CSI feedback method for increasing the efficiency of a reverse data transmission by controlling a transmission system of CSI which is fed back to the base station from the mobile station according to a data transmission rating.

In order to accomplish the above and other objects, according to one aspect of the present invention, a CSI transmission mode is determined by a CSI feedback method in a multi-carrier communication system according to data traffic of a reverse link. According to the determined CSI transmission mode, CSI for subcarriers is encoded into one CSI codeword, and the CSI codeword is transmitted to the base station. The CSI is a modulation mode to be allocated to the subcarriers.

The CSI transmission mode is classified into a first rough mode, a second rough mode, a first fine mode, and a second fine mode according to a CSI classification distinguishability. The CSI classification distinguishability increases in order of the first rough mode, the second rough mode, the first fine mode, and the second fine mode, with the second fine mode being the highest in order. And, as data traffic of a reverse link increases, the CSI transmission mode is determined using a decreasing CSI classification distinguishability. The above subcarriers are classified as no transmission (NoTx) and (binary phase shift keying) BPSK in the first rough mode, NoTx, BPSK and QPSK (quadrature phase shift keying) in the second rough mode, NoTx, BPSK, QPSK and 16QAM (16-quadrature phase shift keying in the first fine mode, and NoTx, BPSK, PSK, 16QAM and 64QAM (64-quadrature phase shift keying) in the second fine mode. The above encoding comprises the steps of measuring SINRs of the subcarriers, allocating identical modulation modes to subcarriers having similar SINRs according to the CSI transmission mode, binding contiguous subcarriers of a frequency region to CSI groups among the subcarriers allocated with the identical modulation modes, and generating the subcarriers as one CSI codeword by an RLE(Run Length Encoding) method.

According to another aspect of the present invention, the CSI transmission mode indicates two modulation modes, including: a first modulation mode for displaying the CSI of the subcarriers in NoTx and BPSK; a second modulation mode for displaying the CSI of the subcarriers in BPSK and QPSK; a third modulation mode for displaying the CSI of the subcarriers in QPSK and 16QAM; and a fourth transmission mode for displaying the CSI of the subcarriers in 16QAM and 64QAM. The CSI transmission mode is stepwise converted into the second, third, and fourth modulation modes from the first modulation mode. If reverse link data traffic is not generated after carrying out a transmission process in a specific CSI transmission mode, CSI is encoded for transmission according to a transmission mode of a next step relating to subcarriers allocated with high modulation modes among modulation modes displayed by the corresponding transmission mode.

## BRIEF DESCRIPTION OF THE DRAWINGS

Fig. 1 is a block diagram showing a structure of a base station to which a channel state information feedback method in accordance with an embodiment of the present invention; is applied;

Fig. 2 is a flow chart illustrating a signal processing procedure between an MS and a base station for performing resource/power allocation and adaptive modulation processes in a multi-carrier communication system;

Fig. 3 is a table showing the run of subcarrier blocks of a maximum contiguous identical modulation mode averagely obtained for subcarriers under time varying channel environment in accordance with mobile velocity;

Fig. 4 is a graph illustrating a grouping of contiguous subcarriers in a CSI feedback method in accordance with the present invention;

Fig. 5 is a table showing modulation modes displayable by CSI transmission modes used in a CSI feedback method in accordance with a first embodiment of the present invention;

Fig. 6 is a diagram illustrating reverse link frames by transmission mode in a CSI feedback method according to a first embodiment of the present invention;

Fig. 7 is a table illustrating various modulation modes displayable by CSI transmission mode used in a CSI feedback method according to a second embodiment of the present invention;

Fig. 8 is a diagram illustrating a CSI feedback method according to a second embodiment of the present invention;

Fig. 9 is a code table that arrays codes used for a CSI feedback method according to the present invention; and

Fig. 10 is a table illustrating performance test results of a CSI encoding technique of a CSI feedback method according to the present invention.

## DETAILED DESCRIPTION OF THE PREFERRED EMBODIMENT

Hereinafter, a channel state information feedback method in accordance with an embodiment of the present invention will be described in reference to the accompanying drawings.

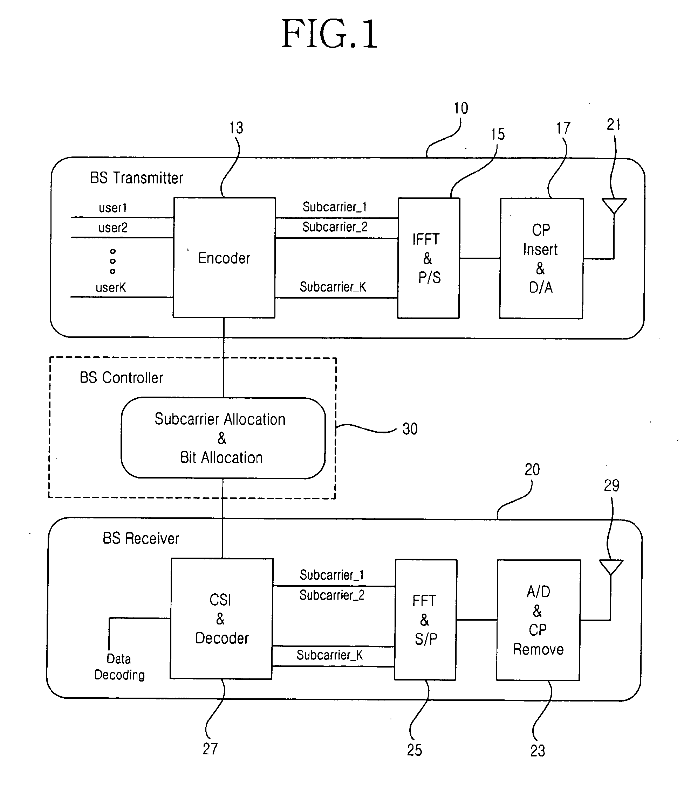

Fig. 1 is a block diagram which illustrates a structure of a base station to which a channel state information feedback method in accordance with an embodiment of the present invention.A base station (BS) includes a BS-transmitter 10, a BS-receiver 20, and a BS-controller 30 for controlling the base station components including the BS-transmitter 10 and the BS receiver 20.

Signals transmitted from MSs(not shown) are received through a receiving antenna 21 of the BS receiver20, and processed by an A/D(Analog/Digital) and CP remove module 23 and are, then sent to an are outputted as a plurality of sub channel signal sequences FFT(Fast Fourier Transform) and S/P(Serial/Parallel) module 25and are outputted as a plurality of sub channel signal sequences. The sub channel signal sequences are demodulated by a CSI and Decoder 27. Among the demodulated signals, CSI signals are transmitted to the BS controller30. Meanwhile, data which is to be transmitted to an MS, is encoded by an Encoder 13 of the BS transmitter 10, multiplexed by an IFFT and P/S (Parallel/Serial) module 15, and then forwarded to a CP Insert and D/A 17 and converted into an analog signal which is then is transmitted via a transmission antenna 29. In the data encoding process, the BS controller 30 analyzes the CSI signals received from the receiver 20 and generates control signals based on the control signals such that the encoder 13 allocates subcarriers and bits for the subcarriers to the corresponding MSs according to the control signals which are transmitted from the BS controller 30. Likewise, so that the base station can allocate bits for each subcarrier, the MSs feedback CSI for the allocated subcarriers to the base station.

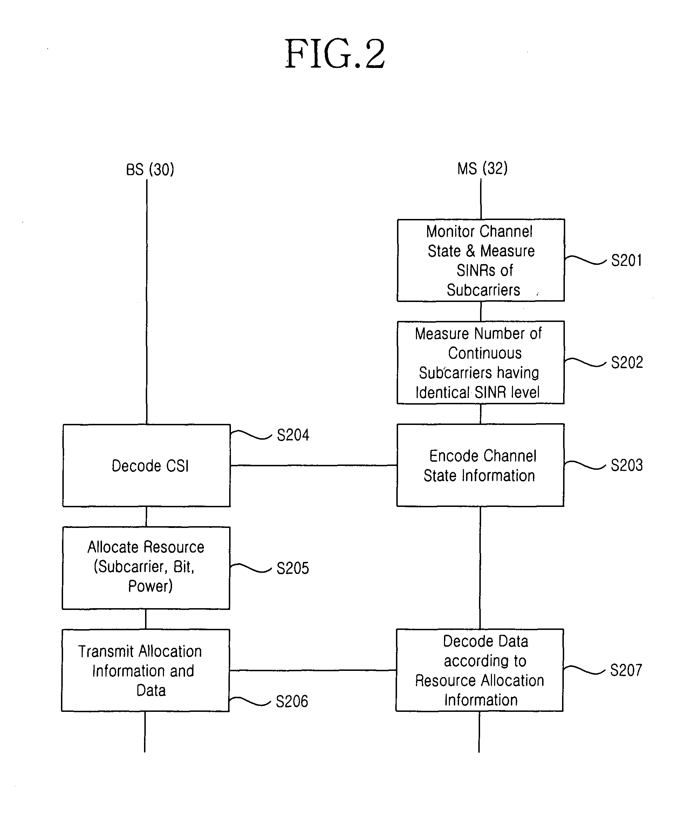

Fig. 2 is a flow chart illustrating a signal processing procedure between an MS and a BS for carrying out resource/power allocation and adaptive modulation processes in an FDD OFDMA system.In step S201 an MS 32 measures SINRs(Signal-to-Interference and Noise Ratios) for each of the allocated subcarrier (s) by monitoring a channel state.The MS 32 then counts the run of contiguous subcarriers having an identical SINR in step S202. The MS 32 then having determined the run continous subcarriers having an indentical SINR encodes a corresponding CSI and transmits the encoded CSI in step S203. A BS 30 then receives the encoded CSI signal from the MS 32 and proceeds to decode the encoded CSI signal in step S204. The BS 30, in state S205, then performs an allocation process which allocates resources such as subcarriers, bits, and power for the MS 32 which corresponds to the decoded CSI. The BS 30-then transmits resource allocation information and user data to the MS 22 in step S206. When receiving the resource allocation information, from the BS 30, the MS 32 decodes the user data according to the resource allocation information (S207).

An SINR $\gamma_n$ for each subcarrier is obtained using Equation 1 below.

Equation 1

$$\gamma_n = |H_n|^2 \cdot \gamma$$

where, $H_n$ is a channel transfer function relative to an nth subcarrier, and $\gamma$ is an entire SINR value.

The MS compares the SINR value $\gamma_n$ for each subcarrier obtained from equation 1 with a predetermined threshold SINR value $\gamma_{threshold}$, determines a maximum modulation mode for each subcarriers, expresses the maximum modulation mode to be allocated to the corresponding subcarriers as CSI, and transmits the CSI to the BS 30.

The BS 30 carries out resource allocation, power allocation and adaptive modulation processes based on the CSI received from the MS 32. Here, an amount of feedback information $R_{feedback}$ transmitted to the BS 30 during a predetermined period increases in proportion to the run of subcarriers $N_{sub}$, the number of bits that configure feedback information $B_{sub}$, and a feedback update period $f_{update}$, as shown in Equation 2.

Equation 2

$$R_{feedback} = N_{sub}B_{sub}f_{update}$$

Likewise, the increase in the amount of feedback information $R_{feedback}$ can deteriorate the channel efficiency of a reverse link. Thus, the amount of the feedback information $R_{feedback}$ should be reduced. Therefore, with consideration to Equation 2, to in order to reduce the amount of the feedback information $R_{feedback}$ transmitted to the BS, the number of the bits $B_{sub}$ that configure the feedback information can be reduced and/or the feedback update period $f_{update}$ can be reduced. However, changing the feedback update period $f_{update}$ may have an influence on system performance. Accordingly, the feedback update period should be determined in consideration of channel situations.

According to the CSI feedback method of the present invention, a CSI encoding technique for reducing the number of bits $B_{sub}$ that configure the feedback information and a CSI transmission technique for adaptively controlling the feedback update period $f_{update}$ in consideration of channel situations have been applied, thereby optimally maintaining system performance and increasing channel efficiency of a reverse link.

CSI encoding technique

Generally speaking, channel situations experienced by adjacent subcarriers in a multi-carrier communication system do not change suddenly. Thus, there is a high probability of contiguous adjacent carriers having identical maximum modulation modes, and the run of carriers decided in the identical maximum modulation modes can be different under various mobile environments.

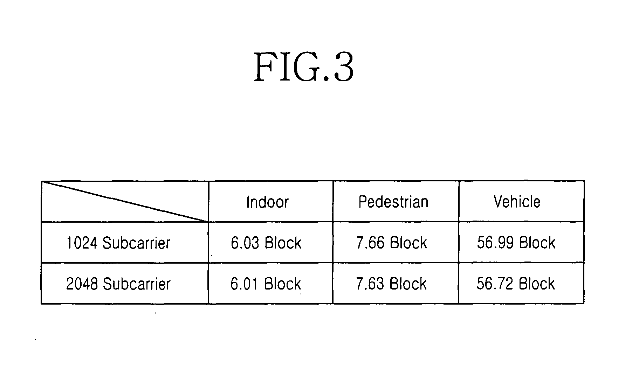

Fig. 3 is a table illustrating the number subcarrier blocks having a maximum contiguous identical modulation mode which is averagely obtained for 1024 and 2048 subcarriers under indoor, outdoor, pedestrian, and vehicular mobile channel environments.

As shown in Fig. 3, about 50 blocks on the average are necessary for a fast time-varying channel environment (e.g., a vehicular environment) and 6 to 7 blocks on the average are necessary under a relatively slow -time varying channel environment (e.g., an indoor and/or a pedestrian environment), are chosen as groups of the maximum contiguous identical modulation mode.

In the present invention, the subcarriers of the maximum contiguous identical modulation mode are grouped, and a lot of CSI for subcarriers included in a specific group is encoded in a lump.

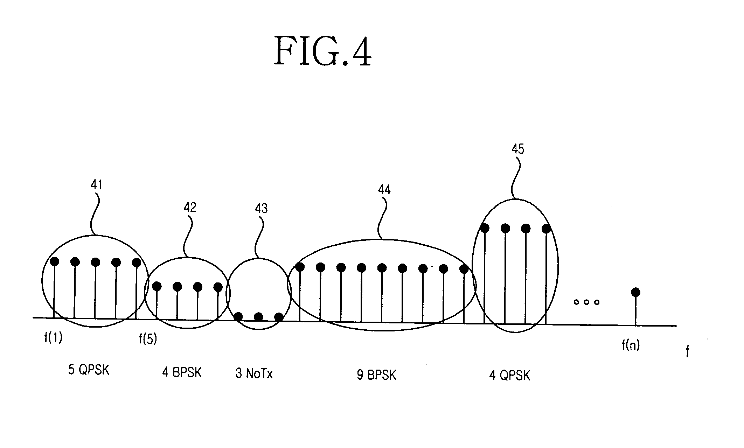

Fig. 4 is a diagram for describing a grouping of contiguous subcarriers in a CSI feedback method in accordance with an embodiment of the present invention.

In Fig. 4, five contiguous sub channels from among all sub channels are determined in a QPSK (Quadrature Phase Shift Keying) mode to be organized as a first group 41. Four contiguous sub channels are determined in a BPSK (Binary Phase Shift Keying) mode to be organized as a second group 42, and three contiguous sub channels are determined in a no transmission (NoTx) mode to be organized as a third group 43. And, nine contiguous sub channels are decided in a QPSK mode to be organized as a fourth group 44, and four contiguous sub channels in a 16QAM mode to be organized as a fifth group 45.

The above organized sub channel groups are encoded into 5-QPSK, 4-BPSK, 3-NoTx, 9-BPSK, and 4-16QAM by using an RLE(Run-Length Encoding) method.

The MS compresses and transmits channel state information on only the subcarriers that are most likely to be allocated, rather than the entire subcarriers, using the RLE method. Thus, it can reduce an amount of feedback information while increasing system efficiency. At this time, in case of subcarriers of channels which the MS does not want to allocate owing to their very poor SINR performance, the MS processes these subcarriers in other codes by considering NoTx codes or compressibility, and compresses them by using the RLE method. Thus, run-length having an identical mode in the multi-carrier communication system gets longer, thereby realizing remarkable compressibility.

Moreover, when the BS operates with a multi-antenna transmission system, the MS feeds back CSI to the BS to every antenna. In this case, the BS compares a single antenna only with the operated system, increasing the CSI that should be transmitted to the BS from the MS in proportion to the number of the antennas. For example, if the BS uses an antenna selection technique, it is inefficient to receive CSI on all of the antennas (that are used for transmission by the BS to the MS) from the MS. Therefore, the MS selects transmit antennas only having high preference by perceiving channel states of each antenna, that is, it selects the transmit antennas only having the best CSI, loads the information on the selected transmit antennas only, and transmits the to the BS by using the RLE technique, thereby increasing feedback efficiency.

CSI transmission technique

As discussed above, an RL code encoded by the RLE method is adaptively transmitted to the BS according to data of a reverse link and under various circumstances. According to the CSI feedback method of the present invention, CSI transmission modes differentiated by the type and the number of modulation modes that are applicable to subcarriers are selectively applied when carrying out a CSI transmission process.

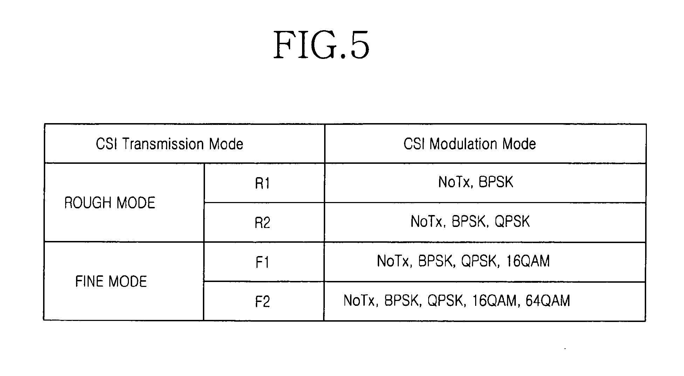

Fig. 5 is a table illustrating CSI information displayable by CSI transmission mode used in a CSI feedback method in accordance with an embodiment of the present invention.

As shown in Fig. 5, in the CSI feedback method in accordance with an embodiment of the present invention, a CSI transmission mode is largely classified into a rough mode and a fine mode. The rough mode is subdivided into a first rough mode R1 and a second rough mode R2. And, the fine mode is subdivided into a first fine mode F 1 and a second fine mode F2.

Modulation modes which are displayable as CSI on each subcarrier in the R1 mode are NoTx and BPSK, and modulation modes which are displayable as CSI on each subcarrier in the R2 mode are NoTx, BPSK, and QPSK. Also, modulation modes which are displayable as CSI on each of the subcarriers in the F1 mode are NoTx, BPSK, QPSK, and 16QAM, and modulation modes which are displayable as CSI on each of the subcarriers in the F2 mode are NoTx, BPSK, QPSK, 16QAM, and 64QAM.

In consideration of the CSI encoding technique mentioned above, the CSI on all the subcarriers is displayed as either NoTx or BPSK while the MS operates in the R1 mode. Thus, the run of identical contiguous subcarriers is increased, thereby promoting the characteristic data compressibility of RLE, an encoding technique that is used in the present invention. As a result, when the transmission mode is changed to the R2, F1, and F2 modes from the R1 mode, channel states of the subcarriers can be subdivided to provide more detail when displaying the channel states. However, in this circumstance compressibility deteriorates, and the number of bits that are required for displaying the CSI which is transmitted to the BS may increase.

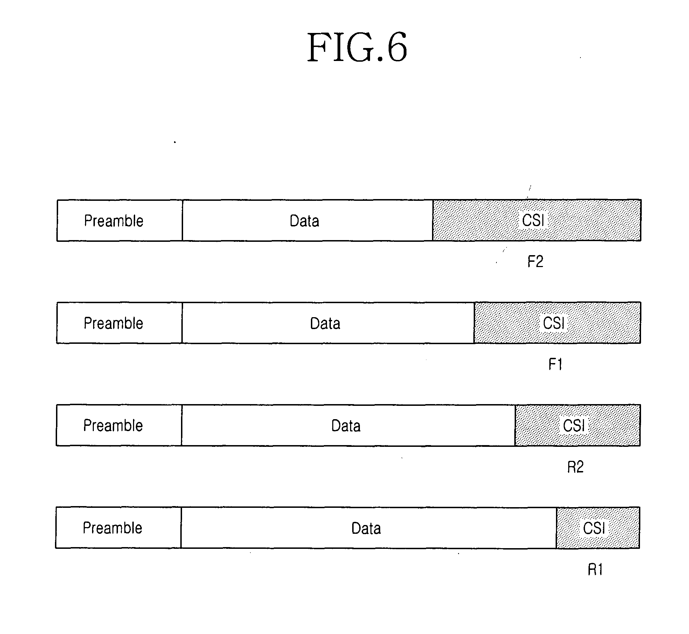

Fig. 6 is a diagram sequentially illustrating a reverse link frame for each of F2, F1, R2, and R1 transmission modes in a CSI feedback method in accordance with an embodiment of the present invention.

The reverse link frame includes a preamble, data, and a CSI field, and determines a CSI transmission mode according to an amount of data which is transmitted through one frame. That is to say, if the amount of data which is transmitted through the reverse link is small, the number of bits for CSI transmitting can be set to be relatively large. Thus, when transmitting a small amount of data per frame it is perferable to transmit CSI using the F2 mode having a high CSI classification distinguishability for subcarriers. If the amount of data to be transmitted per frame increases while transmitting the CSI in the F2 mode, an MS converts the CSI transmission mode into F1, R2, and R1 transmission modes from the F2 mode in order ,respectively. When converted into a transmission mode having low classification distinguishability,(e.g., the R1 mode) the number of bits for displaying the transmitted CSI is reduced. When using a mode having low-classification distinguishability (e.g., the R1 mode), a minimal CSI field is included within the predetermined maximum data frame to assure that the a feedback information transmission (i.e., the CSI) is kept to a minimum.

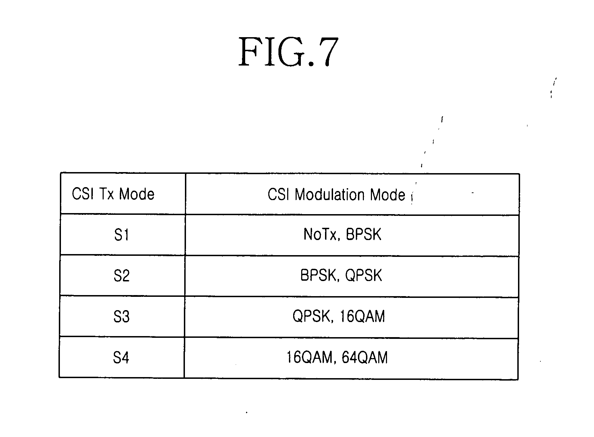

Fig. 7 is a table for arranging CSI displayable by CSI transmission mode used for a CSI feedback method in accordance with a second embodiment of the present invention.

As shown in Fig. 7, , a CSI transmission mode is classified into S1, S2, S3, and S4 modes: the S1 mode defines modulation modes which are displayable as CSI for each subcarrier into a NoTx and a BPSK modulation mode; the S2 mode defines the modulation modes displayable as the CSI for each subcarrier into a BPSK and a QPSK modulation mode; the S3 mode defines the modulation modes displayable as the CSI for each subcarrier into a QPSK and a 16QAM modulation mode; and the S4 mode defines the modulation modes displayable as the CSI for each subcarrier into a 16QAM and a 64QAM modulation mode. Therefore, unlike the CSI feedback method as described in with the first embodiment, all CSI classification distinguishabilities by CSI transmission mode are the same.

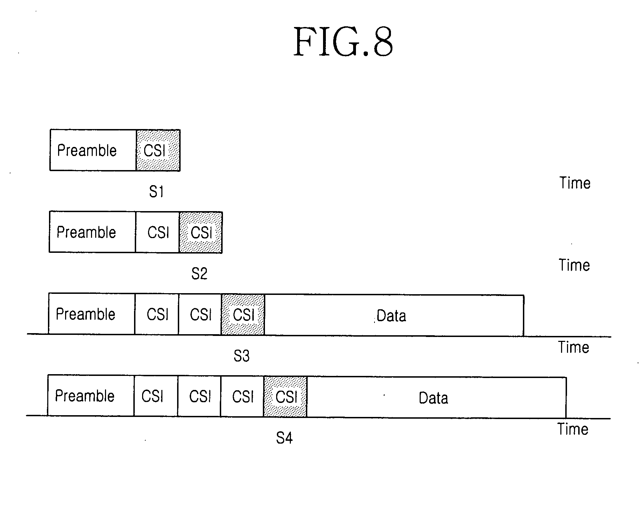

Fig. 8 is a diagram illustrating a CSI feedback method in accordance with an alternative embodiment of the present invention.

First, an MS starts transmitting CSI in an S1 mode which displays a modulation mode having the lowest modulation efficiency. If data traffic of a reverse link is not generated even after transmitting the CSI in the S1 mode, the MS is converted into an S2 mode to transmit the CSI in the S2 mode that has improved the modulation efficiency of CSI of the S1 mode. In other words, if the transmission mode is converted into the S2 mode, among subcarriers determined as NoTx and BPSK in the S1 mode, the MS reclassifies subcarriers determined as BPSK into subcarriers which can conduct BPSK modulation and subcarriers which can conduct QPSK modulation. Then, the MS transmits the CSI in the S2 mode. And, if an idle state continues after transmitting the CSI, the MS is converted into a CSI transmission mode which can display high modulation efficiency in the S3 and S4 modes.

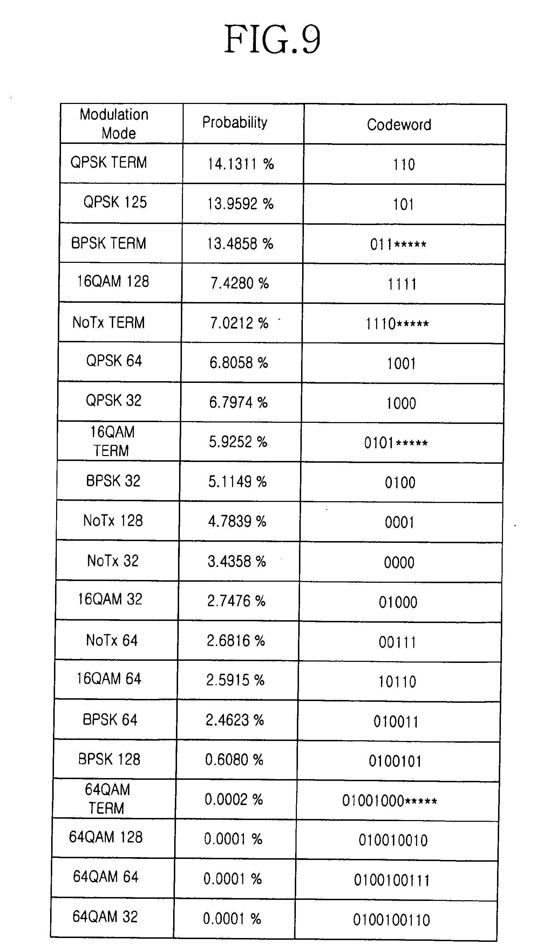

Fig. 9 is a table for setting modulation modes displayed as CSI to NoTx, BPSK, QPSK, 16QAM, and 64QAM and for arranging codes used when performing a CSI feedback process in a CSI feedback method in accordance with the present invention. The code table includes three makeup codes in corresponding to each modulation mode, that is, 128,64, and 32 makeup codes and one completion code The above code table is generated by obtaining a probability of producing codewords of each modulation mode under pedestrian channel environment, and by carrying out a Hofmann coding process based on the obtained probability. Here, the termination code is used for expressing a run which is continued up to 31 from 0, and 5 bits follow the termination code in order to indicate the run-length between 0 and 31..

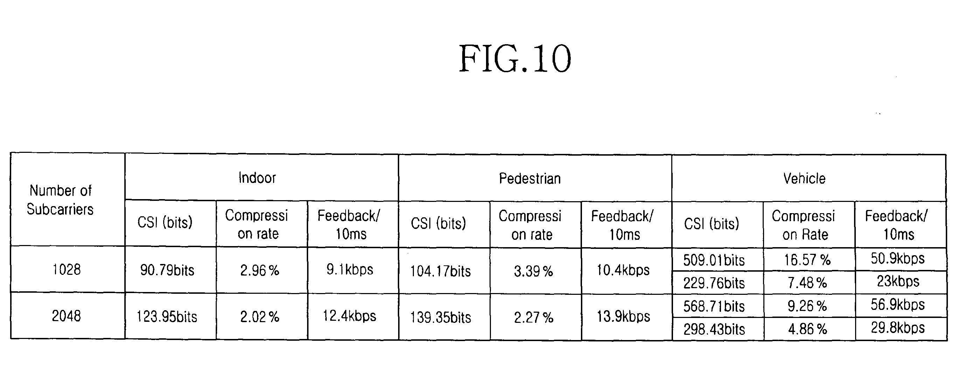

Fig. 10 is a table showing results of encoding CSI with the RLE method of Fig. 9 under various channel environments by using 1024 and 2048 subcarriers, respectively, in consideration of 5 modulation modes as the CSI.

As illustrated in Fig. 10, it is shown that an amount of CSI feedback information is reduced by more than 80% compared to the known CSI Feedback method even under a mobile channel environment of a vehicle with high mobility. Particularly, if channel situations quickly change while the vehicle with high mobility travels, it is effective to transmit channel information in a rough mode rather than a fine mode. Accordingly, compression rates produced when CSI is transmitted at two levels such as NoTx and BPSK are also displayed on a vehicle mobile channel environment item. In this case, it is known that an amount of information has been decreased by more than 90%. Thus, it is possible to remarkably reduce the amount of CSI feedback information in an FDD multi-carrier system by using a CSI encoding technique in accordance with the present invention.

As discussed above, the CSI feedback method in accordance with the present invention can decrease the amount of feedback information by grouping subcarriers having contiguous identical channel states and compressively transmitting the channel states of the grouped subcarriers by using an RLE method. Compared to the prior art, when channels having contiguous identical levels are compressed by using the RLE method, the amount of CSI feedback information can be reduced by about 90% with the use of 2048 subcarriers under vehicular mobile environment. As a result, the amount of the CSI feedback information can reduced in the FDD multi-carrier system. Furthermore, each MS can configure CSI with consideration to QoS (Quality of Service) that a user requires, so that the BS can allocate subcarriers and bits by considering QoS of the MSs.

The present invention reduces the amount of feedback information required by redefining CSI consideration of base station scheduling. If an MS has subcarriers and does not want to allocate channels thereto, the amount of CSI Feedback information can be further reduced by using an RLE method with an NoTx code or a specially defined code thus increasing system efficiency. And, in case a base station operating a multi-antenna system, a MS feeds back corresponding CSI to the base station by selecting an antenna having a good channel state through the RLE method, thereby effectively controlling the amount of CSI feedback information required by the multi-antenna system. Accordingly, these and other aspects of the present invention can be incorporated in existing communication systems.

Moreover, the CSI feedback method in accordance with the present invention adaptively conducts a CSI feedback process according to an amount of data transmitted on a reverse link, effectively using resources of the reverse link. Instead of conducting the feedback process in a lump as shown in prior art , the present invention stepwise carries out the feedback process according to an amount of reverse data in consideration of channel situations. As a result, it can improve system efficiency and channel efficiency of the reverse link.

## Claims

1. In a multi-carrier communication system where a base station (BS) performs a resource power allocation and an adaptive modulation processes for a mobile station (MS) by using Channel State Information (CSI) received from the mobile station, a CSI feedback method comprising the steps of:

   determining a CSI transmission mode according to an amount of data traffic on a reverse link;
   encoding CSI for a plurality of subcarriers into one CSI codeword according to the determined CSI transmission mode; and
   transmitting the CSI codeword to the base station.

2. The CSI feedback method of Claim 1, wherein the CSI - is a maximum modulation mode to be allocated to the subcarriers.
   [A CIS indicates a modulation mode and CSI transmission mode is a scheme for transmitting the CSI. Please don't confuse these two terms.]

3. The CSI feedback method of Claim 2, wherein the CSI transmission mode is classified into one of a first rough mode, a second rough mode, a first fine mode, and a second fine mode according to CSI classification distinguishability.

4. The CSI feedback method of Claim 3, wherein the CSI classification distinguishability increases in order of the first rough mode, the second rough mode, the first fine mode, and the second fine mode, respectively.

5. The CSI feedback method of Claim 4, wherein as the amount of data traffic increases, a CSI transmission mode having a lower CSI classification distinguishability is selected.

6. The CSI feedback method of Claim 5, wherein the subcarriers are classified into no-transmission (NoTx) and binary phase shift keying (BPSK) in the first rough mode, classified into no transmission (NoTx), BPSK, and Quadrature phase shift keying (QPSK) in the second rough mode, classified into NoTx, BPSK, QPSK, and 16-quadurature amplitude keying (16QAM) in the first fine mode, and are classified into NoTx, BPSK, QPSK, 16QAM16QAM, and 64-quadrature amplitude keying(64QAM) in the second fine mode.

7. The CSI feedback method of Claim 1, wherein the encoding step further comprises the steps of:

measuring SINRs of the subcarriers;
allocating identical maximum modulation modes to subcarriers having identical SINRs according to the CSI transmission mode;
binding contiguous subcarriers in a frequency area into CSI groups among the subcarriers allocated with the identical maximum modulation modes; and
generating one CSI codeword by an RLE(Run Length Encoding) technique for the subcarriers.

8. The CSI feedback method of Claim 2, wherein the CSI transmission mode differentiate between one of at least two modulation modes to represent the distinguished modes.

9. The CSI feedback method of Claim 8, wherein the CSI transmission mode includes a first modulation mode for representing the CSI of the subcarriers is classified into NoTx and BPSK, a second modulation mode for representing the CSI of the subcarriers into BPSK and QPSK, a third modulation mode for representing the CSI of the subcarriers into QPSK and 16QAM, and a fourth transmission mode for representing the CSI of the subcarriers into 16QAM and 64QAM

10. The CSI feedback method of Claim 9, wherein the CSI transmission mode is stepwise converted into the second, third, and fourth modulation modes, starting from the first modulation mode, with each modulation mode having a higher efficiency than the previous modulation mode.

11. The CSI feedback method of Claim 10, wherein if data traffic of a reverse link is not generated after carrying out a transmission in a specific CSI transmission mode, among the modulation modes represented by the corresponding transmission mode, CSI is encoded according to a next transmission mode for subcarriers allocated with higher efficiency modulation modes, and is transmitted.

12. In a multi-carrier communication system including a plurality of subcarriers where a base station performs resource allocation and transmission power control processes for a mobile station by using feedback information received from the mobile station, a CSI (Channel State Information)feedback method comprises the steps of:

measuring SINRs(Signal-to-Interference and Noise Ratios) for each subcarrier;
allocating identical CSI(Channel State Information) to subcarriers having identical SINRs;
grouping the subcarriers allocated with the identical CSI;
encoding the CSI into one CSI codeword in consideration of the subcarrier groups; and
transmitting the CSI codeword to the base station.

13. The CSI feedback method of Claim 12, wherein the CSI is a maximum modulation mode being applied to the subcarriers.

14. The CSI feedback method of Claim 13, wherein the modulation mode includes a no-transmission (NoTx), binary phase shift keying(BPSK), quadrature phase shift keying(QPSK), 16-quadature amplitude keying(16QAM), and 64-quadrature amplitude keying(64QAM)modes.

15. The CSI feedback method of Claim 12, wherein the grouping step is conducted for subcarriers contiguous in a frequency area.

16. The CSI feedback method of Claim 12, wherein the CSI codeword is generated by an RLE (Run-Length Encoding) method.

17. The CSI feedback method of Claim 15, wherein the CSI codeword is generated by an RLE (Run-Length Encoding) method.

18. In a multi-carrier communication system where a base station performs resource allocation and transmission power control processes for a mobile station by using CSI(Channel State Information) received from the mobile station, a CSI feedback method comprises the steps of:

determining a CSI transmission mode;
classifying CSI for subcarriers according to the CSI transmission mode;
measuring SINRs for each subcarrier;
deciding CSI of the corresponding subcarriers by comparing the measured SINRs of each subcarrier with a threshold SINR value;
binding contiguous subcarriers in a frequency area into CSI groups among subcarriers determined to have identical CSI;
encoding the CSI for all the subcarriers into one CSI codeword in consideration of the CSI groups; and
transmitting the CSI codeword to the base station.

19. The CSI feedback method of Claim 18, wherein the CSI transmission mode is determined by an amount of data traffic transmitted through a reverse link.

20. The CSI feedback method of Claim 18, wherein the CSI is a maximum modulation mode to be allocated to the subcarriers.

21. The CSI feedback method of Claim 18, wherein the CSI transmission mode is determined by the amount of the data traffic transmitted through the reverse link, and the CSI transmisstion mode is a maximum modulation mode to be allocated to the subcarriers.

22. The CSI feedback method of Claim 21, wherein when determining the CSI transmission mode, as the amount of the data traffic transmitted through the reverse link increases, a CSI transmission mode is determined as having a lower CSI classification distinguishability, and as the amount of the data traffic decreases, the CSI transmission mode is determined as having a higher CSI classification distinguishability.

23. The CSI feedback method of Claim 22, wherein the modulation mode includes no transmission(NoTx), binary phase shift keying(BPSK), quadrature phase shift keying(QPSK), 16-quadature amplitude keying(16QAM), and 64-quadrature amplitude keying (64QAM)modes.

24. The CSI feedback method of Claim 23, wherein the CSI transmission mode is classified into a plurality of modes including a plurality of each of a rough mode and fine mode according to CSI classification distinguishability.

25. The CSI feedback method of Claim 24, wherein the plurality of rough modes are subdivided into a first rough mode and a second rough mode, and the plurality of fine modes are subdivided into a first fine mode and a second fine mode.

26. The CSI feedback method of Claim 25, wherein the first rough mode represents NoTx and BPSK.

27. The CSI feedback method of Claim 25, wherein the second rough mode represents NoTx, BPSK, and QPSK.

28. The CSI feedback method of Claim 25, wherein the first fine mode represents NoTx, BPSK, QPSK, and 16QAM modes.

29. The CSI feedback method of Claim 25, wherein the second fine mode represents NoTx, BPSK, QPSK, 16QAM, and 64QAM modes.

30. The CSI feedback method of Claim 18, wherein the encoding is conducted by an RLE(Run-Length Encoding) technique.

31. The CSI feedback method of Claim 21, wherein the CSI transmission mode represents at least two modulation modes.

32. The CSI feedback method of Claim 31, wherein the modulation mode includes at least two or more modulations chosen from a no-transmission(NoTx), binary phase shift keying(BPSK), quadrature phase shift keying(QPSK), 16-quadature amplitude keying(16QAM), and 64-quadrature amplitude keying (64QAM) modes.

33. The CSI feedback method of Claim 32, wherein the CSI transmission mode is stepwise converted into a CSI transmission mode for displaying a high modulation mode, starting from a CSI transmission mode for displaying a low modulation mode.

34. The CSI feedback method of claim 33, wherein a first transmission mode displays CSI for subcarriers in NoTx and BPSK modulation modes, a second transmission mode displays CSI for subcarriers in BPSK and QPSK modulation modes, a third modulation mode displays in QPSK and 16QAM modes, and a fourth transmission mode displays the CSI for the subcarriers in 16QAM and 64QAM modulation modes.

**35.** The CSI feedback method of Claim 34, wherein an initial CSI transmission mode is the first transmission mode.

**36.** The CSI feedback method of Claim 35, wherein if data traffic of a reverse link is not generated after transmitting a CSI codeword in a specific transmission mode, the CSI codeword is transmitted in a next transmission mode for subcarriers which are decided as having a higher modulation mode.

# FIG.1

BS Transmitter

user1
user2
⋮
userK

Encoder

Subcarrier_1
Subcarrier_2
Subcarrier_K

IFFT & P/S

CP Insert & D/A

BS Controller

Subcarrier Allocation & Bit Allocation

BS Receiver

CSI & Decoder

Data Decoding

Subcarrier_1
Subcarrier_2
Subcarrier_K

FFT & S/P

A/D & CP Remove

# FIG.2

BS (30)                                                    MS (32)

```
                                              ┌─────────────────┐
                                              │ Monitor Channel │
                                              │ State & Measure │ ～ S201
                                              │    SINRs of     │
                                              │   Subcarriers   │
                                              └─────────────────┘

                                              ┌─────────────────┐
                                              │ Measure Number of│
                                              │    Continuous    │ ～ S202
                                              │ Subcarriers having│
                                              │ Identical SINR level│
                                              └─────────────────┘

┌──────────────┐  ～ S204                     ┌─────────────────┐
│              │                              │ Encode Channel  │ ～ S203
│  Decode CSI  │──────────────────────────────│ State Information│
│              │                              │                 │
└──────────────┘                              └─────────────────┘

┌──────────────┐
│Allocate Resource│
│(Subcarrier, Bit, │ ～ S205
│    Power)      │
└──────────────┘

┌──────────────┐                              ┌─────────────────┐
│Transmit Allocation│                         │   Decode Data   │
│ Information and  │──────────────────────────│   according to  │ ～ S207
│     Data       │                            │Resource Allocation│
└──────────────┘  ～ S206                      │   Information   │
                                              └─────────────────┘
```

# FIG.3

|  | Indoor | Pedestrian | Vehicle |
|---|---|---|---|
| 1024 Subcarrier | 6.03 Block | 7.66 Block | 56.99 Block |
| 2048 Subcarrier | 6.01 Block | 7.63 Block | 56.72 Block |

# FIG.4

EP 1 564 953 A2

# FIG.5

| CSI Transmission Mode | | CSI Modulation Mode |
|---|---|---|
| ROUGH MODE | R1 | NoTx, BPSK |
| | R2 | NoTx, BPSK, QPSK |
| FINE MODE | F1 | NoTx, BPSK, QPSK, 16QAM |
| | F2 | NoTx, BPSK, QPSK, 16QAM, 64QAM |

# FIG.6

| Preamble | Data | CSI |

F2

| Preamble | Data | CSI |

F1

| Preamble | Data | CSI |

R2

| Preamble | Data | CSI |

R1

# FIG.7

| CSI Tx Mode | CSI Modulation Mode |
| --- | --- |
| S1 | NoTx, BPSK |
| S2 | BPSK, QPSK |
| S3 | QPSK, 16QAM |
| S4 | 16QAM, 64QAM |

# FIG.8

| Preamble | CSI |
|----------|-----|

S1                                                                              Time

| Preamble | CSI | CSI |
|----------|-----|-----|

S2                                                                              Time

| Preamble | CSI | CSI | CSI | Data |
|----------|-----|-----|-----|------|

S3                                                                              Time

| Preamble | CSI | CSI | CSI | CSI | Data |
|----------|-----|-----|-----|-----|------|

S4                                                                              Time

# FIG.9

| Modulation Mode | Probability | Codeword |
|---|---|---|
| QPSK TERM | 14.1311 % | 110 |
| QPSK 125 | 13.9592 % | 101 |
| BPSK TERM | 13.4858 % | 011***** |
| 16QAM 128 | 7.4280 % | 1111 |
| NoTx TERM | 7.0212 % | 1110***** |
| QPSK 64 | 6.8058 % | 1001 |
| QPSK 32 | 6.7974 % | 1000 |
| 16QAM TERM | 5.9252 % | 0101***** |
| BPSK 32 | 5.1149 % | 0100 |
| NoTx 128 | 4.7839 % | 0001 |
| NoTx 32 | 3.4358 % | 0000 |
| 16QAM 32 | 2.7476 % | 01000 |
| NoTx 64 | 2.6816 % | 00111 |
| 16QAM 64 | 2.5915 % | 10110 |
| BPSK 64 | 2.4623 % | 010011 |
| BPSK 128 | 0.6080 % | 0100101 |
| 64QAM TERM | 0.0002 % | 01001000***** |
| 64QAM 128 | 0.0001 % | 010010010 |
| 64QAM 64 | 0.0001 % | 0100100111 |
| 64QAM 32 | 0.0001 % | 0100100110 |

# FIG.10

| Number of Subcarriers | Indoor | | | Pedestrian | | | Vehicle | | |
|---|---|---|---|---|---|---|---|---|---|
| | CSI (bits) | Compression rate | Feedback/ 10ms | CSI (bits) | Compression rate | Feedback/ 10ms | CSI (bits) | Compression on Rate | Feedback/ 10ms |
| 1028 | 90.79bits | 2.96% | 9.1kbps | 104.17bits | 3.39% | 10.4kbps | 509.01bits | 16.57% | 50.9kbps |
| | | | | | | | 229.76bits | 7.48% | 23kbps |
| 2048 | 123.95bits | 2.02% | 12.4kbps | 139.35bits | 2.27% | 13.9kbps | 568.71bits | 9.26% | 56.9kbps |
| | | | | | | | 298.43bits | 4.86% | 29.8kbps |

EP 1 564 953 A2